# EUROPEAN PATENT APPLICATION

(11) **EP 3 617 994 A1**
(43) Date of publication of application: **04.03.2020**
(21) Application number: 19191317.7
(22) Date of filing: 12.08.2019
(51) Int. Cl.: G06T 7/00

(54) **BLADE SENTENCING**

(30) Priority: 28.08.2018 GB 201813937
(71) Applicant: Rolls-Royce plc, London N1 9FX (GB)
(72) Inventor: Coull, John, Derby, Derbyshire DE24 8BJ (GB); Dawes, William, Derby, Derbyshire DE24 8BJ (GB); Lee, Wen, Derby, Derbyshire DE24 8BJ (GB)
(74) Representative: Rolls-Royce plc

(57) **Abstract**

A method of sentencing, accepting or rejecting, a cast component is disclosed. Initially, scanning the component to determine a number of datum points; this can be done using optical scanning techniques. The datum points from the scanned results are then aligned with an ideal design computer aided design (CAD) model of the component. A comparison of the scanned datum points of the component is performed against the data from the ideal design CAD model of the component, and any geometric deviations between the scan and the ideal design CAD model are determined. Using the datum points from the scan of the component an assessment is performed of at least one performance prediction factor for the component. Finally, using dimensional data extracted from the scan and/or the performance prediction factor the component is sentenced for either acceptance or rejection. Additionally, if the component is determined to have a deviation that lies within a pre-determined limit for the dimensional data and/or the performance factor a determination may be made as to whether the component can be reoriented.

## Description

### Field of Disclosure

The invention relates to a method of sentencing blades for use in a turbine engine.

### Background of the Disclosure

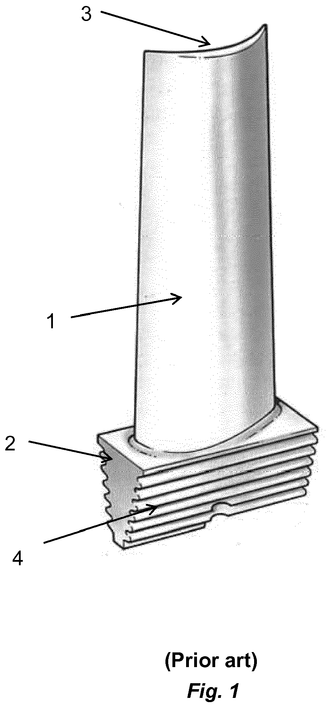

A blade for use in a turbine stage or compressor stage of a turbine engine comprises an aerofoil section having a leading and trailing edge, with pressure and suction surfaces, as shown in **Figure 1****.** The blade 1 is twisted from root 2 to tip 3 in order to maintain a pressure gradient along its length. To achieve the constraints of having a constant pressure gradient and also the correct angle for performance it is important that the blade is manufactured with the correct angle of incidence at each point. Along with these factors, another important consideration for the performance of a rotating blade is the exit flow angle of the blade; this is the angle at which the air leaves the blade.

The blades for a turbine engine are typically cast from superalloy materials to form a single crystal blade; this is desirable for strength reasons. Once the blade for a turbine engine has been cast machining needs to be performed to form a fir tree profile so that they can be mounted to the disc. The later machining is done to the root of the blade such that it can be fitted onto the mounting disc with the correct geometry. Consequently, accurate machining of the root is required to ensure that when the blade is installed it operates close to or at its optimum performance.

Before the root can be machined, however, the blade needs to be sentenced, that is to say accepted or rejected for further use. To do this the blade is measured and aligned by selecting points of reference and reference lines and comparing these with an ideal design model for the blade. The comparison of these reference points and lines is then used to determine if the blade is suitable for purpose and an acceptance or rejection of the device can be based upon this scan. If the compared values are within a predetermined deviation the blade is accepted and if they are not then the blade is rejected. If the blade is accepted the serrations forming the fir tree can be machined on the surface of the blade root.

This method, although effective, is wasteful as it has a strict criterion for which a blade is accepted or rejected. The process therefore is ultimately limited. This is because in part the capacity of the blade is controlled by other parameters such as the exit flow angle and the aerodynamic geometric throat area, which although are taken into account in the deviation tolerance for acceptance are not accurately determined. The alignment and the deviations from a design ideal therefore cannot be used to directly control the blade performance. As a result of this method some of the blades that are scrapped based upon the geometric acceptance could have been serviceable blades but are rejected for not conforming to the geometrical tolerance. These blades could be serviceable because although the blades do not meet the dimensional tolerances they could meet the requisite performance criteria. Consequently, this prior art process can lead to large amounts of waste as adequate blades are being rejected based upon a dimensional based criteria assessment. Therefore, there is a need to improve the means of determination of the acceptance of the blade, so that there is less wastage in the process.

### Summary of the Disclosure

According to a first aspect there is provided a method of sentencing the casting of a component, the method comprising the steps of: scanning the component to determine a number of datum points; aligning the datum points with an ideal design computer aided design (CAD) model of the component; comparing the scanned datum points of the component with the data from the ideal design CAD model of the component and determining any geometric deviations between the scan and the ideal design CAD model; using dimensional data extracted from the scan of the component to perform an assessment of at least one performance prediction factor for the component; and using dimensional data extracted from the scan and the performance prediction factor to sentence the component for either acceptance or rejection of the component.

The method of the invention provides a more comprehensive representation of a manufactured blade. It allows for a determination of the predicted performance of the blade as well as just the dimensional data. From this a more accurate assessment of the suitability of the blade can be determined. This results in an improved sentencing which is less wasteful.

When performing sentencing of the component for acceptance or rejection, if the component is determined to have a deviation that lies within a pre-determined limit for the dimensional data and/or the performance factor a determination may be made as to whether the component can be reoriented.

This additional step reduces waste, allowing serviceable blades that are not within the tolerance limits the chance to be reoriented. This can also have the additional benefit of allowing the blades to be closer to the optimum design as small discrepancies can be corrected.

The component may be reoriented using a reorientation process, which applies an orientation correction to the cast to compensate for an orientation error.

The scanning may be performed by an optical scanning technique.

The performance prediction factor may be obtained from calculations obtained from a computational fluid dynamic model of the component.

The component may be a blade for use in a gas turbine engine.

If the blade is accepted a fir tree root profile can be machined on to the root of the blade.

The blade can be a high pressure turbine blade.

A surrogate model can be employed in the determination of the performance prediction factor. A surrogate model can be employed in the determination of the reorientation.

Artificial intelligence can be employed in the determination of the performance prediction factor. Artificial intelligence can be employed in the determination of the reorientation.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### Brief Description of the Drawings

Embodiments will now be described by way of example only, with reference to the Figures, in which:
**Figure 1** is an example of a known turbine blade;
**Figure 2** is a sectional side view of a gas turbine engine;
**Figure 3** is the prior art method of sentencing the blades;
**Figure 4** is a the method of sentencing the blades based upon the current invention;
**Figures 5a and 5b** show simulation and modelling used to determine the physical characteristics of the blade, with **Figure 5a** showing the fitting of the scanned blade on the design ideal and **Figure 5b** showing a modelling of fluid flow around the blade;
**Figures 6a and 6b** are flow charts showing different methods to predict the performance factor of the component, **Figure 6a** shows the use of a surrogate model and **Figure 6b** shows the use of an Artificial Neural Network;
**Figures 7a**, **7b and 7c** are flow charts of the sentencing criteria based upon the present invention.

### Detailed Description

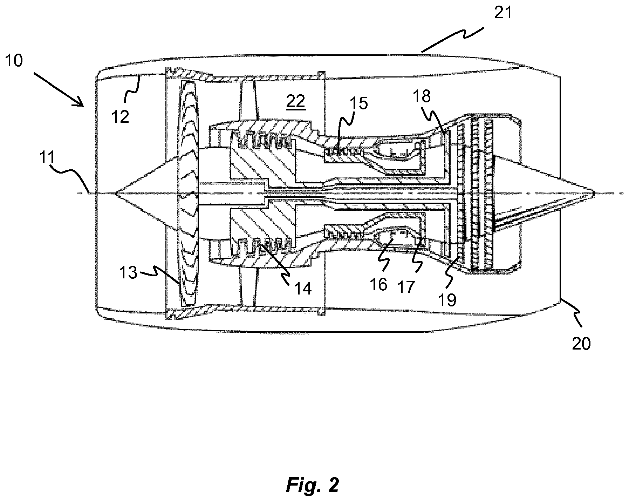

With reference to **Figure 2**, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the airflow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

It will be understood that the invention is not limited to the embodiments described here and various modifications and improvements can be made without departing from the concepts described herein. Except where mutually exclusive, any of the features may be employed separately or in combination with any other features and the disclosure extends to and includes all combinations and sub-combinations of one or more features described herein. Aerofoils for turbine engines, such as propellers, fans, compressors, turbines and the endwalls thereof are manufactured using component specific complex industrial processes. The quality of the manufacturing and the resulting shape influences the engine performance. Other key areas that are affected by the quality of the manufacturing are the manufacturing yield, and the cost of production. Once manufactured, the aerofoil shape is typically inspected with a suitable technique to determine whether the component has the requisite characteristics and is thus fit for purpose.

One way to determine whether a component is fit for purpose is to gather surface geometry data using, for example, a co-ordinate measurement machine, CMM, to obtain two-dimensional surface contours. Alternatively, a more sophisticated three-dimensional optical scanning technique can be used to give a comprehensive surface representation. Other suitable methods as known in the art may be used.

Once data for a given component has been collected using an appropriate technique, it is compared with a set of limits which are defined against a design ideal or reference shape. This is done by comparing the measured component to an ideal design to which a manufacturing tolerance has been applied. If the measured component includes portions out of tolerance then it is rejected as not fit for purpose. If it is within the stipulated tolerance, it is accepted.

The performance and the casting of the blade means that there are a number of variables, however, the large number variables makes it difficult to set accurate tolerances for the acceptability of a component. Hence, the tolerances are generally more conservative than they need to be. This results in unnecessarily high scrappage rates of manufactured parts which can be costly, particularly when the components are complex and/or made from exotic materials such as those typically used in aero gas turbine engines and the aerospace industry more broadly.

One approach to combat this involves an assessment of a performance factor of a component and uses this to reduce the scrappage rate and increase quality of components in a number of ways.

The first way of utilising the performance data of a component is to set performance thresholds for a component and use these to determine whether a part is acceptable. The performance thresholds may be predicted or measured thresholds that represent acceptable levels of performance against which a manufactured component can be assessed.

Although the following description will discuss the invention in relation to a blade for use in a turbine engine, the person skilled in the art will appreciate that the teachings of this document can be applied to any other suitable component.

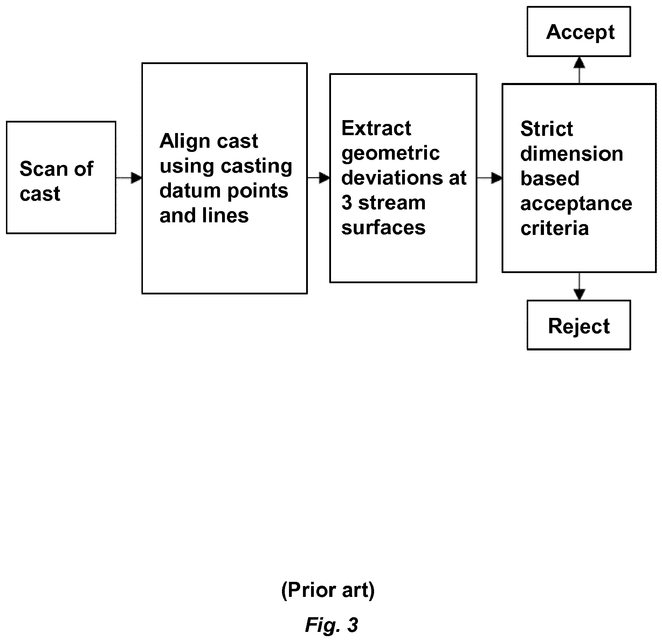

**Figure 3** shows the current state of the art method of determining the acceptance or rejection of a blade. Step one in this method a scan of the cast blade component is performed. The scan can be conducted in number of ways such as through optical scanning techniques or through contact measurements. Step two aligns the measurements taken from the blade with the design ideal, which is a computer model of the design before manufacture. This step is carried out within the computer program by comparing chosen reference points and lines with the equivalent lines off the design ideal. Such a step can be carried out at the casting facilities and/or once the blade arrives at a machining facility. With the blade aligned geometric deviations are determined at 3 radial heights or stream surfaces in step three of the method. The geometric deviations are used to apply a dimension based acceptance criteria in Step four, which allows for a degree of selectability of the blades. If the blade is accepted the fir tree can be machined on the root. The machined blades with the fir trees roots can then be dispatched to the assembly line so that the blade can then be mounted on their discs. On the other hand if it is rejected the part is scrapped or recycled. As such the threshold for acceptance or rejection is strict. There is no scope for determining if the blade can be reoriented such that it could be used if other factors of the blade are usable. This process therefore is limited as it inherently leads to more waste, due to the scrappage of blades that could potentially be used if reworked.

The limitations of this method are that: firstly, the blade is aligned using a series of datum points that were positioned to control the geometric throat area, whereas the capacity is controlled by the exit flow angle and the aerodynamic throat. This is therefore limited as the geometric alignment cannot directly control the blade performance; as such the optimum blade is not always achieved. Secondly, as the blades are accepted or rejected using geometric tolerances that do not correlate to the performance of the blade, then blades that could have been used are wasted based upon this. Instead, the blade's performance is the quantity of interest. It is this that should be used to determine acceptance, and if possible blades should then be corrected to ensure a match with the ideal design. Resulting from only selecting blades that meet the geometric tolerance criteria and not the performance criteria will mean that the blades do not always operate at optimum levels. Following this it is also the case that as the performance of blades is an unknown, the current process could be scarping blades that could be fit for service but were rejecting on the grounds of deviating too far from a geometric tolerance based upon a determination for a point that does not influence the blade's performance. Consequently, the prior art method is not as efficient as would be desired as it is wasteful based upon the rejection criteria.

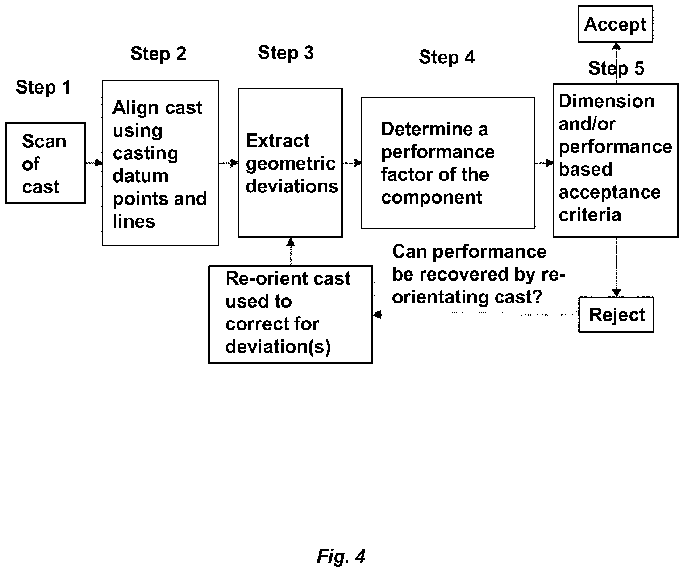

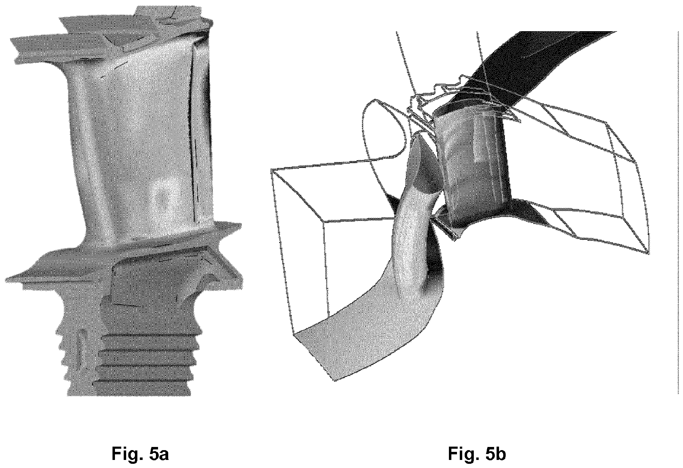

**Figure 4** shows the improved scan method according to the present invention. Step one is performing a scan of the blade, this can either be done using an optical scanning technique, through contact measurements, or via any other suitable methods. Step 2 aligns the scan results with the results from the ideal design computer aided design (CAD) model that is stored within the computer analysis program. This can be done using a best fit algorithm in order to produce the best match between the scan surfaces and the ideal design from the CAD model. An example of this is shown in **Figure 5a****.** For this fitting technique a region of the design ideal is selected and compared against that of the measured scan, the algorithm works to give the minimum distance between the selected region of the ideal design and that of the measured blade. This fitting can be performed on any suitable program, such as GOMInspect™ or Polyworks™ software. Once the blade has been aligned with the ideal design the program in which the data is analysed can then be used to extract deviations from any number (N) of stream surfaces. In Step 4 the measured values are programmed into a computational fluid dynamic (CFD) modelling system to predict the performance of the blade based upon the determined values for the blade and its interaction with other features and input variables. This step could also be performed using a surrogate model or artificial intelligence. Step 5 is the determination of acceptance or so called sentencing step. In this the dimensional data and/or the performance data are used to determine if the blade is accepted or rejected. This performance selection criteria could for example be based upon quantities like turbine capacity, turbine efficiency, flow turning or a combination of these or any other suitable parameter. The dimensional data that is used in the sentencing could for example be based on wall thickness and/or suitability for machining among other parameters that will be apparent to the person skilled in the art. If the blade is accepted, the blade can then have the fir tree machined, such that the blade is ready to be sent to the production line so that it can be mounted onto the disc. If the blade has been rejected, a determination is then made upon the performance data. This determination is based upon whether it is possible for the performance be recovered by re-orientating the cast. This would not be the case, if there was a fault in the blade surface, such that there was a large deviation from the ideal design. In cases where the deviation from the design ideal is closer, and the performance estimation lie within certain level of deviation from an ideal performance, it may be determined that the blade can be reoriented such that it would meet the ideal design and consequently, the blade be reprocessed. Once the reprocessing has been carried out the blade can then be assessed again in the same flow as the earlier process. The blade can further undergo a possible second or further reorientation process if necessary.

The scanning performed in Step 1 can be done using any suitable means: examples of which are using optical or contact measurement techniques. Contact measuring machines can be used to build up an accurate profile of the surface by contacting a probe to large number of points across the surface. Alternatively, the scans can be performed using an optical three dimensional coordinate measuring machine. These can use any wavelengths of light, but are particularly suited to using blue light as this allows for the ambient light to be filtered out of the scans. The head holding the scanner and/or the blade can be moved relative to each other to produce a 3D scan of the entire blade. As such, using these optical scans one can obtain more detailed and easily interpretable quality information of an object with shorter measuring times when compared against contact measurements. The data that is obtained from the scan can be compared with the dimensional data from the computer aided design (CAD) model of the blade. This allows for deviations from the design model to be accurately identified. From these deviations an assessment of the device can be made and as to the need for whether it needs to be scrapped or recycled.

Step 2 the cast is aligned with the ideal design from the CAD design. This can be performed in any appropriate software. Here the aim is to attempt to match the surfaces of the two such that the match is as close as possible between the two in the majority of areas - i.e. a best fit. This ensures that an accurate determination of the differences in dimensions between the ideal design and the measured surface. This can then be presented to the user graphically in the form of contour map to show the deviations from the ideal design. The number of datum points in the alignment can be varied depending upon factors such as the processing capabilities of the computer. Alternatively, an averaging over several points could be used to determine a mean point which is fitted to reduce the amount of data that is required to be processed.

With the data from the scan aligned with the ideal design, the deviations from the two can be determined in Step 3. The deviations can be determined at any number of points on the surface, where it is deemed suitable to measure. A visualisation comparison between the two may also be obtained so that a visual inspection of the deviations can be determined for a user. The deviations are not just limited to being measured at a specific point, but could also be a deviation along a pre-determined line on the surface

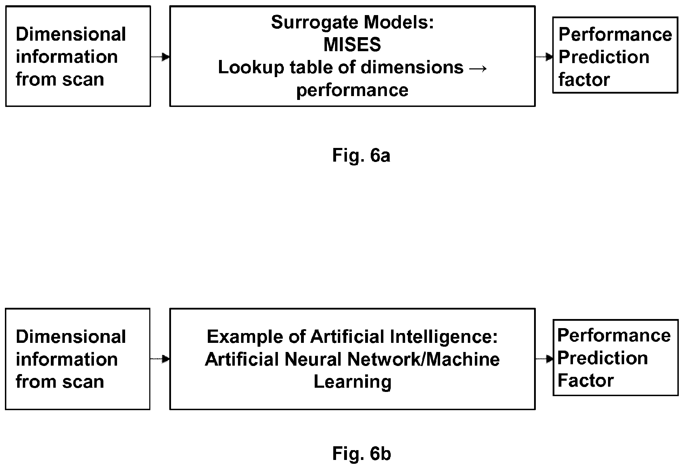

The aerodynamic assessment used in Step 4 can be determined from a number of different physical determinations. The assessment can be performed by inserting the scanned data into modelling software that will allow for the performance to be determined. For example this could be using computational fluid dynamic, or surrogate models, or artificial intelligence based methods, among other well-known means. In the case where computational fluid dynamic modelling is used for the determination of aerodynamic properties any appropriate software can be used. **Figure 5b** demonstrates an example plot showing the density of fluid on the blade. However, the modelling can also be used to plot other quantities such as velocities and or pressures. The determination may also use the input variables to simulate the movement of fluid around the blade, from which performance predictors such as inlet and exit flow angles, efficiency, capacity and reaction can be calculated. In the case of the using a surrogate model the program can be used to determine a number of different parameters, with less computational expenditure than running a complete CFD model, however, assessments based on these techniques are slightly more limited in the results that they provide. For example a surrogate model may be used to determine the stress in the system; this can be the Mises stresses, which can be determined from a look up table based upon the dimensions of the blade. From these values, an indication of the performance can be determined, which in turn can be used to predict the performance of the blade. A schematic of this method is shown in **Figure 6a****.** Alternatively, artificial intelligence may be used. In this case the data from the scan in step 1 is inputted into the program. From this the calculations may be carried out on a system employing an artificial neural network or machine learning to be able to quickly recognise patterns and use these to determine the performance and then to obtain a performance prediction. A flowchart of this method is shown in **Figure 6b****.** The performance prediction could be used to determine any number of related features to the performance of the blade. For example this could be the aerodynamic properties, relative angles of the surfaces, stress values within the blade, or thermal properties of the blades and a cooling assessment of the blades. It is not limited to analysing the blade based upon a single method; instead more than one of the physical properties of the considerations can be used to determine the suitability of a blade.

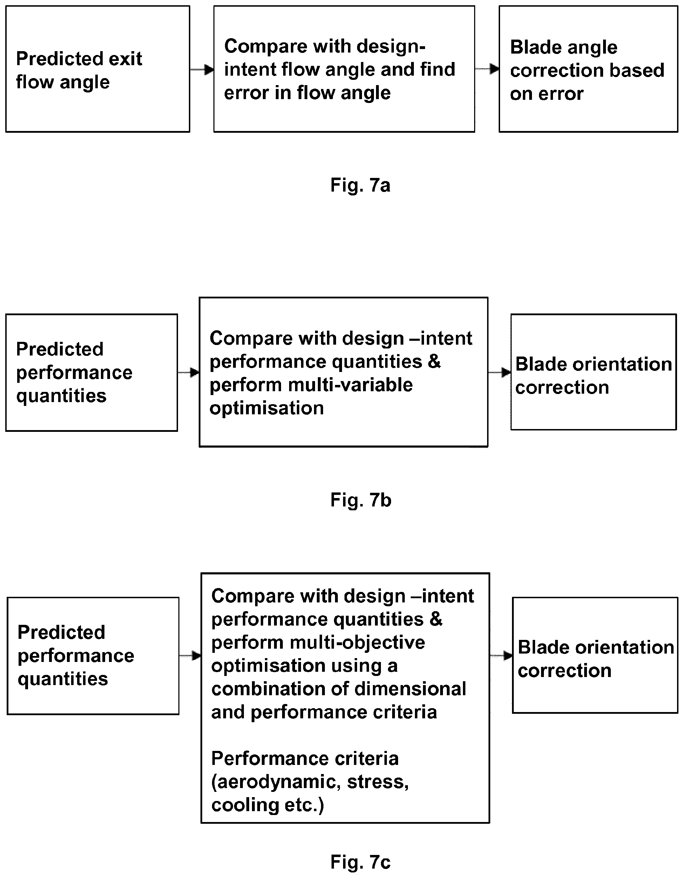

In the determination of whether the performance can be recovered by a reorientation of the finished casting the software may evaluate any number of criteria that can be of value. For example this may be derived from the predicted exit flow angle, which can then be compared with the intended flow angle of the ideal design and from this an error in the flow angle may be obtained. Determination can then be made if the blade angle error can be corrected through casting reorientation. A flow chart of this example is shown in **Figure 7a****.** Alternatively, if the predicted performance quantities are used these may be compared with the ideal design values and their respective intended performance quantities. From this a multi-variable optimisation may be performed to see if the orientation of the blade can be optimally corrected. In this case the determination of the correction can be carried out through a simple comparison of the differences as discussed above. A flow chart of this example is shown in **Figure 7b****.** Alternatively, it could be based upon a weighted correction of the differences. A multi-variable look-up table of the design space may also be employed. In some instances as also discussed above a multi-objective optimisation of the various objectives, that can comprise of a combination of dimensional and performance quantities, can be used for the blade orientation correction this is shown in **Figure 7c****.**

The reorientation process applies the desired orientation correction that has been determined through one of the means described above. For example, if the exit flow angle prediction has an error of x° when compared to the design ideal, the cast is rotated by x° to compensate for the error in exit flow angle. This reorientation can be done based on any criteria or combination of criteria to give the best performing blade from the cast.

If the blade is rejected the blade can undergo the reorientation process to realign the blade, as such the blade will become closer to the design ideal. The blade can then go through the determination steps and again the blade can be accepted or rejected based upon the same acceptance criteria. Again, if it does not pass the requirements it can undergo a further reorientation process. With each of these reorientations the blades become closer to the design ideal. The blades being closer to the design ideal also increases the performance of the compressor or the turbine as all the blades are operating at a desirable performance level.

Benefits of this method includes that this new orientation process reduces the variability in the system. Said variability is introduced through the manufacturing process, which can produce small variations from a desired design ideal. Thus, it can considerably impact the selection of blades and the above described method can control the performance instead of just controlling the geometric features. This therefore allows for better control of the performance of the blades that are produced. Consequently, as the performance of each blade is now known due to the aerodynamic analysis that is carried out for every blade, the number of geometry-based manufacturing concessions should drastically reduce. This therefore increases the quality of the blade and of the quality of the system as a whole. The further benefit of this process is that there are no requirements for new equipment on the shop floor for this process to be implemented.

Although the concept has been used to describe a method of assessing and reworking of blades in the use in compressors and turbines, it can be used in any other suitable products. Thus, the functional assessment and real geometry based performance correction can be applied to the benefit in a number of fields where high performance cast components are used. This is because relating to the geometry variations to the performance of the device can reduce the wastage in such components and increase the quality of such systems in which they are employed. Also by carrying out these scans and the modelling one can also develop a model of how geometric variations affect the structural, thermal, cooling performances. It can also provide an indication as the natural frequency and the forced response behaviour of the component and how this can be corrected.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method of sentencing a cast component, the method comprising the steps of:
scanning the component to determine a number of datum points;
aligning the datum points with an ideal design computer aided design (CAD) model of the component;
comparing the scanned datum points of the component with the data from the ideal design CAD model of the component and determining any geometric deviations between the scan and the ideal design CAD model;
using dimensional data extracted from the scan of the component to perform an assessment of at least one performance prediction factor for the component; and
using the dimensional data extracted from the scan and/or the performance prediction factor to sentence the component for either acceptance or rejection of the component.

2. The method of sentencing a cast component as claimed in claim 1, wherein when performing sentencing of the component for acceptance or rejection, if the component is determined to have a deviation that lies within a pre-determined limit for the dimensional data and/or the performance factor a determination is made as to whether the component can be reoriented.

3. The method of sentencing a cast component as claimed in claim 2, wherein the component is reoriented using a reorientation process, which applies an orientation correction to the cast to compensate for an orientation error.

4. The method of sentencing a cast component as claimed in any preceding claim, wherein the scan is performed by an optical scanning technique.

5. The method of sentencing a cast component as claimed in any preceding claim, wherein the performance prediction factor is obtained from a computational fluid dynamic (CFD) model of the component.

6. The method of sentencing a cast component as claimed in any preceding claim, wherein the component is a blade for use in a gas turbine engine.

7. The method of sentencing a casting component as claimed in claim 6, wherein if the blade is accepted, a fir tree root profile is machined on to the root of the blade.

8. The method of sentencing a cast component as claimed in claim 6 or 7, wherein the blade is a high pressure turbine blade.

9. The method of sentencing a cast component method as claimed in any preceding claim, wherein a surrogate model is employed in the determination of the performance prediction factor.

10. The method of sentencing a cast component as claimed in any preceding claim, wherein artificial intelligence is employed in the determination of the performance prediction factor.
